# EUROPÄISCHE PATENTSCHRIFT

(11) **EP 0 628 739 B1**
(45) Veröffentlichungstag und Bekanntmachung des Hinweises auf die Patenterteilung: **28.05.1997**
(21) Anmeldenummer: 94106739.9
(22) Anmeldetag: 29.04.1994
(51) Int. Cl.: F16C 29/04, F16C 29/12

(54) **Anordnung zum Anstellen von Laufrollen gegen eine Führungsschiene**
Device to adjust rollers against a guide rail
Dispositif pour ajuster des rouleaux contre un rail-guide

(30) Priorität: 03.06.1993 DE 9308306 U
(43) Veröffentlichungstag der Anmeldung: 14.12.1994
(73) Patentinhaber: SKF LINEARSYSTEME GmbH, D-97424 Schweinfurt (DE)
(72) Erfinder: Edelmann, Ludwig, D-97717 Sulzthal (DE); Glöckner, Hermann, D-97422 Schweinfurt (DE); Mayer, Uwe, D-97702 Münnerstadt (DE); Velde, Henryk, D-97440 Werneck (DE); Walter, Lothar, D-97422 Schweinfurt (DE)
(74) Vertreter: Glanz, Werner

(56) Entgegenhaltungen:
- EP-A- 0 336 297
- EP-A- 0 394 186
- DE-A- 3 829 276
- DE-U- 9 016 625
- FR-A- 2 102 518
- US-A- 4 289 061

## Beschreibung

Die Erfindung betrifft eine Anordnung der im Oberbegriff des Anspruchs 1 angegebenen Art, wobei zum Anstellen von Laufrollen gegen eine Führungsschiene mindestens eine Laufrolle vor dem Festsetzen radial nachgiebig angeordnet ist.

In Linearführungseinheiten werden häufig Laufwagen eingesetzt, die einen Tragkörper mit daran befestigten und entlang einer Führungsschiene geführten Laufrollen aufweisen. Um eine exakte Führung beim Verfahren des Laufwagens zu erhalten, müssen die auf entgegengesetzten Seiten der Führungsschiene angeordneten Laufrollen möglichst spielfrei bzw. mit Vorspannung an die Führungsschiene angestellt sein. Hierzu sind verschiedene Maßnahmen bekanntgeworden. Eine wirkungsvolle und einfach zu handhabende Lösung ist in der DE-A1 38 29 276 beschrieben. Hier weisen die Laufrollen einen Lagerinnenring auf und sind mittels eines durch den Lagerinnenring hindurchgreifenden und in eine Gewindebohrung des Tragkörpers eingeschraubten Bolzens befestigt. Zwischen dem Bolzen und dem Lagerinnenring ist ein radial federelastisches Element angeordnet, und die Laufrollen werden, solange sie noch nicht endgültig festgeschraubt sind, beim Aufsetzen auf die Führungsschiene gegen die Elastizität der federelastischen Elemente radial verlagert. Die Laufrollen werden dadurch mit Vorspannung gegen die Schiene angestellt und können in dieser Stellung endgültig festgeschraubt werden. Allerdings besteht diese Anordnung aus einer Anzahl von Einzelteilen, die sowohl die Lagerhaltung als auch die Montage erschweren.

Der Erfindung liegt deshalb die Aufgabe zugrunde, bei einer Anordnung eingangs genannter Art die Anzahl der Einzelteile zu reduzieren und die Montage weiter zu vereinfachen.

Diese Aufgabe wird erfindungsgemäß durch die im Kennzeichen des Anspruchs 1 angegebenen Merkmale gelöst.

Die Vorteile der Erfindung bestehen insbesondere darin, daß die vormontierte Laufrolle ohne weitere Teile in die Bohrung des Tragkörpers eingesetzt und festgeschraubt werden kann, so daß einbauseitig keine Einzelteile zusammengestellt werden müssen. Gegenüber dem Stand der Technik kann weiterhin der Bolzen - bei gleicher Laufrollengröße - mit größerem Durchmesser ausgeführt werden, so daß höhere Anzugsmomente beim Festschrauben möglich sind und größere Verschiebewiderstände gegen seitlich auf den Tragkörper einwirkende Kräfte erreicht werden.

Durch die Anordnung der Innenlaufbahn für die Wälzkörper der Laufrolle unmittelbar auf der Rollenachse - gemäß Anspruch 2 - entfällt außerdem ein separater Lagerinnenring, wodurch die Anordnung noch weiter vereinfacht und verbilligt wird. Auch die axiale Bauhöhe wird gegenüber dem Stand der Technik verringert, weil die Achse bündig mit der Stirnfläche der Laufrolle abschließen kann.

Ist gemäß Anspruch 3 ein Bund zwischen Achse und Bolzen angeordnet, so kann der Bolzen bedarfsweise mit einem noch größeren, ein noch weiter erhöhtes Anzugsmoment erlaubenden Durchmesser ausgeführt werden.

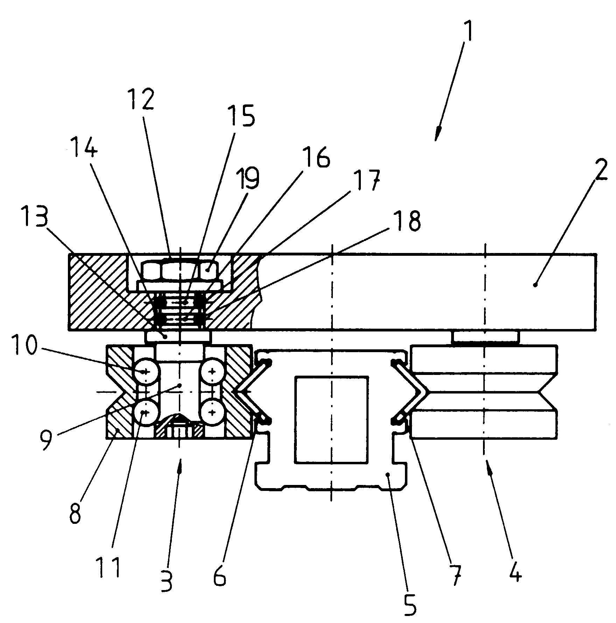

Weitere vorteilhafte Ausgestaltungen der Erfindung ergeben sich aus den Unteransprüchen 4, 5 und 6 sowie aus dem nachfolgend beschriebenen, in der Zeichnung dargestellten Ausführungsbeispiel.

Ein entlang einer Führungsschiene 5 verschiebbarer Laufwagen 1 weist einen Tragkörper 2 mit daran befestigten Laufrollen 3, 4 auf. Die Führungsschiene 5 wird von einem Hohlprofil gebildet, das auf gegenüberliegenden Längsflächen mit gehärteten Laufschienen 6, 7 für die Laufrollen 3, 4 versehen ist. Die Laufrollen 3, 4 weisen jeweils einen Laufrollenmantel 8 auf, dessen Umfangsfläche den Laufschienen 6, 7 entsprechend profiliert ist und dessen Bohrungsfläche als Außenlaufbahn eines zweireihigen Schrägkugellagers ausgestaltet ist. Die Achsen 9 der Laufrollen 3, 4 sind unmittelbar mit den Innenlaufbahnen für die Wälzkörper 10, 11 versehen und einstückig mit einem Bolzen 12 ausgebildet, der ein Gewindeende aufweist. Zwischen der Achse 9 und dem Bolzen 12 ist ein als Anlagefläche am Tragkörper 2 dienender Bund 13 angeordnet. Schließlich sind in dem die entsprechende Befestigungsbohrung 14 im Tragkörper 2 durchgreifenden Bereich des Bolzens 12 zwei Ringnuten 15, 16 eingearbeitet, in die jeweils ein Rundschnurring 17, 18 aus einem elastomeren Material eingelegt ist.

Zur Montage des Laufwagens 1 auf der Führungsschiene 5 werden zunächst die Laufrollen 3, 4 mit ihren Bolzen 12 in die entsprechende Befestigungsbohrung 14 des Tragkörpers 2 eingesetzt und durch loses Aufdrehen der Mutter 19 gesichert. Sodann wird der Laufwagen 1 auf die Führungsschiene 5 aufgesetzt, wobei die Laufrollen 3, 4 gegen die Kraft der elastischen Rundschnurringe nach außen gedrängt werden, was gleichzeitig eine geringfügige Schrägstellung der Achsen 9 bzw. Bolzen 12 zur Folge hat. Anschließend werden die Muttern 19 angezogen, wodurch sich die Achsen 9 bzw. Bolzen 12 wieder senkrecht ausrichten und die Anstell-Vorspannung der Laufrollen 3, 4 gegen die Führungsschiene 5 weiter verstärken.

Um Ungenauigkeiten - z. B. der Laufschienen 6, 7 - auszugleichen und um die Reibung zu verringern, aber auch für den oben beschriebenen Anstell-Vorgang ist es vorteilhaft, wenn die Kontaktgeometrie Laufrolle 3, 4/Laufschiene 6, 7 so gestaltet ist, daß eine oder beide Kontaktflächen eine geringe Krümmung (Balligkeit) aufweisen.

Die Erfindung ist nicht auf das in der Figur dargestellte Ausführungsbeispiel beschränkt. Beispielsweise können die Innenlaufbahnen für die Wälzkörper 10, 11 auch auf einem Lagerinnenring angeordnet sein, durch dessen Bohrung der mit einem Gewindeende versehene Bolzen hindurchgreift; anstelle des Bundes 13 kann eine Paßscheibe vorgesehen sein; der Bund 13 zwischen Achse und Bolzen bzw. die Paßscheibe kann aber auch entfallen, wenn der Bolzen einen geringeren Durchmesser aufweist als das dem Tragkörper 2 zugewandte Ende der Achse; anstelle der Rundschnurringe 17, 18 können Federelemente - wie etwa eine Wellfeder - angeordnet sein usw.

## Patentansprüche

1. Anordnung umfassend einen Tragkörper (2), Laufrollen (3, 4), die mittels eines Bolzens (12) in einer Bohrung (14) des Tragkörpers (2) befestigt sind und eine Führungsschiene (5), wobei zum Anstellen der Laufrollen gegen die Führungsschiene mindestens eine Laufrolle (3) vor dem Festsetzen des Bolzens (12) durch federelastische Elemente (17, 18) radial nachgiebig angeordnet ist, dadurch gekennzeichnet, daß ein oder mehrere federelastische Elemente (17, 18) zwischen dem durch die Bohrung (14) im Tragkörper (2) hindurchgehenden Bolzen (12) und der Bohrungswand angeordnet sind.

2. Anordnung nach Anspruch 1, dadurch gekennzeichnet, daß die Achse (9) der Laufrolle (3, 4) einstückig mit dem Bolzen (12) ausgebildet ist und die Innenlaufbahn für zwischen der Achse (9) und dem Laufrollenmantel (8) angeordnete Wälzkörper (10, 11) aufweist.

3. Anordnung nach Anspruch 2, dadurch gekennzeichnet, daß zwischen Achse (9) und Bolzen (12) ein Bund (13) angeordnet ist, dessen dem Bolzen (12) zugewandte Fläche der Anlage am Tragkörper (2) dient.

4. Anordnung nach Anspruch 2, dadurch gekennzeichnet, daß die Achse mindestens an ihrem dem Tragkörper zugewandten Ende einen größeren Durchmesser aufweist als der Bolzen.

5. Anordnung nach einem der vorhergehenden Ansprüche, dadurch gekennzeichnet, daß zwischen der Laufrolle (3, 4) und dem Tragkörper (2) eine Paßscheibe angeordnet ist.

6. Anordnung nach einem der vorhergehenden Ansprüche, dadurch gekennzeichnet, daß der Bolzen (12) mit mindestens einer Ringnut (15, 16) zur Aufnahme eines als elastisches Element dienenden Rundschnurringes (17, 18) aus einem Elastomer oder dergleichen versehen ist.

## Claims

1. Arrangement comprising a supporting frame (2), rollers (3, 4) which are fastened by means of a pin (12) in a bore hole (14) in the supporting frame (2), and a guide rail (5), whereby, in order to position the rollers against the guide rail, at least one roller (3) is rendered flexible in the radial direction by means of spring elastic elements (17, 18) before the pin is fastened, characterised in that one or more spring elastic elements (17, 18) are arranged between the pin (12) inserted through the bore hole (14) in the supporting frame (2) and the wall of the bore hole.

2. Arrangement according to Claim 1, characterised in that the axle (9) of the roller (3, 4) is formed in one piece with the pin (12) and that the inner raceway has rolling elements (10, 11) positioned between the axle (9) and roller casing (8).

3. Arrangement according to Claim 2, characterised in that a collar (13) is positioned between the axle (9) and pin (12) such that the side of the collar facing the pin (12) provides the contact surface with the supporting frame (2).

4. Arrangement according to Claim 2, characterised in that the axle has a larger diameter than that of the pin at least at the end which faces the supporting frame.

5. Arrangement according to one of the above Claims, characterised in that a shim is positioned between the roller (3, 4) and the supporting frame (2).

6. Arrangement according to one of the above Claims, characterised in that the pin (12) is equipped with at least one ring groove (15, 16) for supporting a toroidal ring (17, 18) made of elastomer or similar material which serves as an elastic element.

## Revendications

1. Dispositif comportant un élement porteur (2), des galets de roulement (3, 4) qui sont fixés à l'aide d'une vis (12) dans un alésage (14) de l'élément porteur (2) et un rail de guidage (5), pour l'application des galets de roulement (3, 4) contre le rail de guidage, au moins un des galets de roulement (3) étant monté à l'aide d'éléments élastiques de manière à pouvoir s'effacer radialement avant le serrage de la vis (12), caractérisé par le fait qu'un ou plusieurs éléments (12, 18) élastiques sont placés entre la vis (12) qui pénètre dans l'alésage (14) dans l'élément porteur (2) et la paroi dudit alèsage.

2. Dispositif selon la revendication 1, caractérisé par le fait que l'axe (9) des galets de roulement (3, 4) forme une pièce avec la vis (12) et porte la piste de roulement intérieure pour des corps roulants (10, 11) qui sont disposés entre l'axe (9) et l'enveloppe (8) de galet de roulement.

3. Dispositif selon la revendication 2, caractérisé par le fait qu'un collet (13), dont la face tournée vers la vis (12) sert d'appui sur l'élément porteur (2), est disposé entre l'axe (9) et la vis (12).

4. Dispositif selon la revendication 2, caractérisé par le fait que l'axe, au moins à son extrémité tournée vers l'élément porteur (2), présente un diamètre qui est supérieur à celui de la vis.

5. Dispositif selon l'une des revendications précédentes, caractérisé par le fait qu'une rondelle ajustée est disposée entre le galet de roulement (3, 4) et l'élément porteur (2).

6. Dispositif selon l'une des revendications précédentes, caractérisé par le fait que la vis (12) est pourvue d'au moins une gorge annulaire (15, 16) destinée à recevoir un anneau torique (17, 18) en un matériau élastomère ou similaire faisant office d'élément élastique.
